# EUROPÄISCHE PATENTSCHRIFT

(11) **EP 1 350 708 B1**
(45) Veröffentlichungstag und Bekanntmachung des Hinweises auf die Patenterteilung: **02.02.2005**
(21) Anmeldenummer: 03006606.2
(22) Anmeldetag: 25.03.2003
(51) Int. Cl.: B62D 5/07, F15B 11/16

(54) **Hydrauliksystem eines Schleppers mit Anbaugerät**
Hydraulic system for a tractor and attached tool
Système hydraulique pour tracteur et son outil

(30) Priorität: 04.04.2002 DE 10214850
(43) Veröffentlichungstag der Anmeldung: 08.10.2003
(73) Patentinhaber: CNH Österreich GmbH, 4300 St. Valentin (AT)
(72) Erfinder: Lindenberger, Bruno, Dipl.-Ing., 4312 Ried in der Riedmark (AT)
(74) Vertreter: Feldkamp, Rainer, Dipl.-Ing.

(56) Entgegenhaltungen:
- DE-A- 19 646 427
- US-A- 5 896 943
- US-A- 5 918 558
- "RD 66 105/03.95" MANNESMANN REXROTH PROGRAM INFORMATION MOBILE HYDRAULICS - MOBILE STEUERUNGEN / STEUERBLÖCKE / ZENTRALHYDRAULIK CHP, 1. März 1995 (1995-03-01), XP002248068 Im Internet verfügbar unter: http://www.boschrexroth.com:80/BoschRexrot h/business_units/brm/sub_websites/brm_cata log/downloads/PDF/rd66105.pdf am 17.07.2003
- "RD 66 243/07.95" MANNESMANN REXROTH PROGRAM INFORMATION MOBILE HYDRAULICS - MOBILE STEUERUNGEN / STEUERBLÖCKE / ZENTRALHYDRAULIK TYP LT46, 1. Juli 1995 (1995-07-01), XP002248069 Im Internet verfügbar unter: http://www.boschrexroth.com:80/BoschRexrot h/business_units/brm/sub_websites/brm_cata log/downloads/PDF/rd66243.pdf am 17.07.2003

## Beschreibung

Die Erfindung betrifft ein Hydrauliksystem eines Schleppers mit Anbaugerät ohne eigene Druckversorgung, dessen Funktionsorgane ganz oder teilweise mit hydraulischen Antrieben ausgestattet sind, nach den Merkmalen im Oberbegriff des Patentanspruchs 1.

Die am häufigsten in der Praxis anzutreffende Variante der Druckversorgung eines solchen Arbeitsgerätes ist, dieses über einen sich im Hydrauliksystem des Schleppers befindenden Versorgungsanschluß (Power- Beyond- Anschluß) mit dem notwendigen Druck zu versorgen. Dieser Versorgungsanschluß besteht aus einer Druckanschluß-, einer Steuer- (Load Sensing) und einer Rücklaufleitung, wodurch die lastabhängige Druckversorgung der am Arbeitsgerät angeordneten hydraulischen Steuer- und Regelventile verwirklicht wird. Dazu erfolgt die Druckversorgung vom Schlepper aus über genannte Druckanschlußleitung entsprechend des von der Steuerleitung gemeldeten augenblicklichen Lastdruckes am Arbeitsgerät. Der Vorteil eines derartigen Versorgungsanschlusses besteht darin, daß immer nur die von der Steuerleitung gemeldete benötigte Ölmenge zum Anbaugerät fließt.

In Schleppern werden heute in Abhängigkeit von der Schleppergröße und auch vom Hersteller für diese Zwecke verschiedene Hydrauliksysteme verwendet. Das ist einmal das Konstantstromsystem (Open Center System), zum anderen das lastkompensierte System mit Konstantpumpe (Open Center Load Sensing System) und schließlich noch das lastkompensierte System mit Verstellpumpe (Closed Center Load Sensing System).

Eine Ausführungsvariante des letztgenannten Systems, das die geringste Verlustleistung von allen Systemen aufweist und bei Schleppern mit mittleren und höheren Motorleistungen angewendet wird, ist mit dem "Katalog zum Lieferprogramm der Unternehmensgruppe MANNESMANN REXROTH, Teil RD 66 105 /03.95" bekannt geworden. Hier ist ein erstes Vorzugsventil bzw. Prioritätsventil zur vorrangigen Versorgung der Lenkung vor allen übrigen Verbrauchern vorgesehen. Da dieser Schlepper auch mit einem Anhängerbremsventil ausgestattet ist, sichert ein zweites Vorzugsventil die Priorität der Lenkung vor der Bremse. Das Lastschaltgetriebe wird hier von der gemeinsamen Verstellpumpe mit Druck versorgt, so daß ein drittes Hilfsdruckvorzugsventil dessen Priorität nach der Lenkung und nach der Bremse sicherstellen muß. Der restliche Volumenstrom wird zum Hubwerksregelventil, weiteren Wegeventilen und zu einem Versorgungsanschluß mit Steuerleitung für ein Anbaugerät weitergeleitet, die alle parallel geschaltet sind und demzufolge gleichberechtigt versorgt werden. An diesem Hydrauliksystem ist zu bemängeln, daß im Fall einer sogenannten Unterversorgung, was bei geringer Motordrehzahl des Schleppers und mehreren geschälteten Verbrauchern vorkommen kann, der Volumenstrom nicht mehr für den Versorgungsanschluß für das Arbeitsgerät ausreicht. Der zwangsläufig dadurch entstehende Drehzahlabfall an den Funktionsorganen führt dann zu Fehlfunktionen, wenn diese für ihre Aufgabe unbedingt eine konstante Drehzahl benötigen. Das kann beispielsweise die Schnittgeschwindigkeit rotierender Mähteller an Rotationsmähwerken oder das dosierte Ausbringen von Streu- bzw. Saatgut, von Dünger oder Schädlingsbekämpfungsmitteln etc. auf eine bestimmte Flächeneinheit sein.

Deshalb liegt der Erfindung die Aufgabe zugrunde, das Hydrauliksystem eines Schleppers mit Anbaugerät so zu verbessern, daß der Versorgungsanschluß für das Arbeitsgerät bei allen Belastungen und bei Unterversorgung mit einem ausreichenden Volumenstrom versorgt wird.

Diese Aufgabe wird gemäß der Erfindung durch die Merkmale des Patentanspruchs 1 gelöst, wobei in den Unteransprüchen Merkmale aufgeführt sind, die diese Lösung in vorteilhafter Weise weiterentwickeln.

Dazu ist eine Hydraulikpumpe mit einem Vorzugsventil-Lenkung verbunden, das mit seiner vorrangigen Ausgangsleitung mit einem Lenkventil zur Betätigung der Lenkung des Schleppers in Verbindung steht. Dadurch wird die Lenkung mit erster Priorität vor allen übrigen Verbrauchern mit Drucköl versorgt, um die Lenkfähigkeit des Schleppers unter allen Bedingungen sicherzustellen.

Der Restvolumenstrom wird durch die untergeordnete Ausgangsleitung des Vorzugsventils- Lenkung zuerst einem aus einer Druckanschlußleitung und einer Steuerleitung bestehenden Versorgunsanschluß für das Arbeitsgerät zugeleitet, bevor er den Ventilblock für die Arbeitshydraulik erreicht. Da diesem Versorgungsanschluß ein zusätzliches Vorzugsventil vorgeordnet ist, dessen vorrangige Druckanschlußleitung und Steuerleitung mit dem Versorgungsanschluß verbunden ist und seine den Restvolumenstrom führende untergeordnete Ausgangsleitung zum Ventilblock für die Arbeitshydraulik geht, hat der eine zweite Priorität nach der Lenkung gegenüber den restlichen Verbrauchem. Die vorrangige Druckanschlußleitung versorgt dabei die am Arbeitsgerät angeordneten Steuer- und Regelventile zum hydraulischen Antrieb seiner Funktionsorgane nur mit der Ölmenge, die von der Steuerleitung angefordert wird. Im Ventilblock für die Arbeitshydraulik der restlichen Verbraucher sind beispielsweise das Hubwerkregelventil und ein oder mehrere Wegeventile zusammengefaßt.

Ein so aufgebautes Hydrauliksystem ist für den Fall seiner Unterversorgung von besonderer Bedeutung, was dann eintreten kann, wenn die von den Ventilen angeforderte Ölmenge größer als die von der Hydraulikpumpe augenblicklich bereitgestellte ist. Das ist häufig ein Problem, wenn der Antriebsmotor des Schleppers nur mit geringer Drehzahl läuft und dazu mehrere Ventile gleichzeitig betätigt werden. Unter diesen Umständen können Prioritäten gesetzt werden, wie hier die erste Priorität der Lenkung vor dem Versorgungsanschluß für das Arbeitsgerät und eine zweite Priorität des Versorgungsanschlusses vor den übrigen Verbrauchern der Arbeitshydraulik. Dabei kann es natürlich aber auch einmal dazu kommen, daß die Verbraucher ohne Priorität langsamer arbeiten oder sogar stehen bleiben. Das ist aber von untergeordneter Bedeutung, weil diese Verbraucher das am ehesten verkraften können.

An dieser Stelle wird vorsorglich darauf hingewiesen, daß der Schutzumfang dieser Erfindung auch dann nicht verlassen wird, wenn zwischen die Priorität der Lenkung und die des Versorgungsanschlusses eine weitere oder mehrere noch dazwischen eingefügt werden. Das könnten beispielsweise die Prioritäten einer Bremse oder eines Lastschaltgetriebes sein. Entscheidend für den Schutzumfang ist, daß der Versorgungsanschluß wenigstens gegenüber der Lenkung untergeordnet ist, aber selbst auch gegenüber anderen Verbrauchern eine Priorität hat.

In einer vorteilhaften Ausgestaltung der Erfindung nach den Merkmalen des Unteranspruchs 2 ist es für einen mit einem hydraulischen Anhängerbremsventil ausgestatteten Schlepper zweckmäßig, nach der Priorität der Lenkung und vor der Priorität des Versorgungsanschlusses eine weitere Priorität für die Anhängerbremse einzufügen, weil Bremsen immer noch wichtiger ist als die Gewährleistung der Funktion des Anbaugerätes.

In einer bevorzugten Ausführungsform der Erfindung nach den Merkmalen des Unteranspruchs 3 ist das zusätzliche Vorzugsventil für den Versorgungsanschluß als separates Teil vor dem Ventilblock der Arbeitshydräulik angeordnet, wodurch sich mehrere Möglichkeiten zu dessen Unterbringung im Schlepper ergeben.

Nach den Merkmalen des Unteranspruchs 4 kann aber auch das zusätzliche Vorzugsventil in den Ventilblock integriert sein.

In Weiterbildung der Erfindung ist es nach den Merkmalen des Unteranspruchs 5 möglich, als Hydraulikpumpe eine Konstantpumpe einzusetzen, die mit einem lastkompensierten oder nicht lastkompensierten Ventilblock der Arbeitshydraulik verbunden ist.

In einer weiteren Ausführungsvariante der Erfindung nach den Merkmalen des Unteranspruchs 6 ist es aber auch möglich, eine Verstellpumpe zu verwenden, die mit einem lastkompensierten Ventilblock der Arbeitshydraulik in Verbindung steht.

Zusammenfassend stellen sich damit die Vorteile der Erfindung so dar, daß der Versorgungsanschluß für das Arbeitsgerät unter allen Bedingungen und auch bei Unterversorgung des Hydrauliksystems mit einem ausreichenden Volumenstrom bzw. der von ihm tatsächlich benötigten Ölmenge versorgt wird, so daß ein Drehzahlabfall der Funktionsorgane ausgeschlossen ist.

Die Erfindung soll nun anhand von zwei Ausführungsbeispielen näher erläutert werden, wobei die einzelnen Figuren zeigen:
- Fig. 1:: ein lastkompensiertes Hydrauliksystem mit Konstantpumpe und einem Versorgungsanschluß für ein Arbeitsgerät mit vorgeschaltetem zusätzlichen Vorzugsventil
- Fig. 2:: ein lastkompensiertes Hydrauliksystem mit Verstellpumpe und einem Versorgungsanschluß für ein Arbeitsgerät mit vorgeschaltetem zusätzlichen Vorzugsventil.

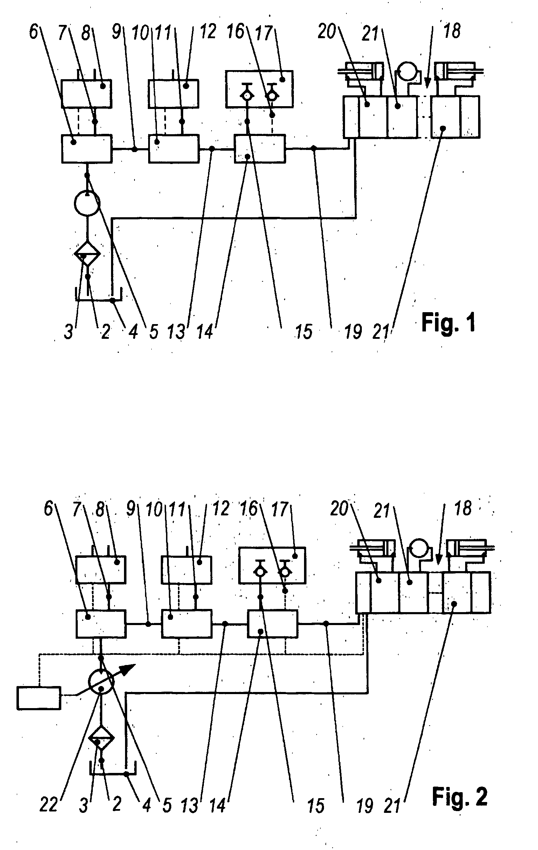

Im ersten Ausführungsbeispiel nach Figur 1 steht eine als Konstantpumpe 1 ausgeführte Hydraulikpumpe über ihre Saugleitung 2 und bei Zwischenschaltung eines Filters 3 mit einem Ölbehälter 4 in Verbindung. Deren Druckleitung 5 führt zu einem Vorzugsventil- Lenkung 6, dessen vorrangige Ausgangsleitung 7 zu einem Lenkventil 8 zur Betätigung der Lenkung des Schleppers geht. Die den Restvolumenstrom führende untergeordnete Ausgangsleitung 9 des Vorzugsventils- Lenkung 6 ist mit einem Vorzugsventil-Bremse 10 verbunden, dessen vorrangige Ausgangsleitung 11 mit einem Anhängerbremsventil 12 in Verbindung steht. Die untergeordnete Ausgangsleitung 13 des Vorzugsventils- Bremse 10 führt zu einem zusätzlichen Vorzugsventil 14, dessen vorrangige Druckanschlußleitung 15 und Steuerleitung 16 den Versorgungsanschluß 17 zum hydraulischen Antrieb der Funktionsorgane für ein vom Schlepper mitgeführtes Arbeitsgerät als Anbaugerät bilden. Am Ende dieses Hydrauliksystems befindet sich der Ventilblock 18 der Arbeitshydraulik, der mit der untergeordneten Ausgangsleitung 19 des zusätzlichen Versorgungsventils 14 verbunden ist. Zu ihm gehören wenigstens ein Hubwerkregelventil 20 und ein oder mehrere Wegeventile 21, die alle miteinander parallel verschaltet sind.

Das zweite Ausführungsbeispiel ist prinzipiell gleich wie das erste aufgebaut, nur mit dem Unterschied, daß die Hydraulikpumpe hier eine Verstellpumpe 22 ist.

### Bezugszeichenaufstellung

- 1: Konstantpumpe
- 2: Saugleitung
- 3: Filter
- 4: Ölbehälter
- 5: Druckleitung
- 6: Vorzugsventil- Lenkung
- 7: vorrangige Ausgangsleitung
- 8: Lenkventil
- 9: untergeordnete Ausgangsleitung
- 10: Vorzugsventil- Bremse
- 11: vorrangige Ausgangsleitung
- 12: Anhängerbremsventil
- 13: untergeordnete Ausgangsleitung
- 14: zusätzliches Vorzugsventil
- 15: vorrangige Druckanschlußleitung
- 16: Steuerleitung
- 17: Versorgungsanschluß
- 18: Ventilblock
- 19: untergeordnete Ausgangsleitung
- 20: Hubwerkregelventil
- 21: Wegeventil
- 22: Verstellpumpe

## Patentansprüche

1. Hydrauliksystem eines Schleppers mit Anbaugerät ohne eigene Druckversorgung, bei dem:
◆ eine Hydraulikpumpe mit einem Vorzugsventil- Lenkung (6) verbunden ist, das mit seiner vorrangigen Ausgangsleitung (7) mit einem Lenkventil (8) zur Betätigung der Lenkung in Verbindung steht,
◆ das Vorzugsventil- Lenkung (6) mit seiner den Restvolumenstrom führenden untergeordneten Ausgangsleitung (9) mit einem Ventilblock (18) der Arbeitshydraulik, zu dem wenigstens ein Hubwerkregelventil (20) und ein oder mehrere Wegeventile (21) gehören, sowie einem aus einer Druckanschlußleitung (15) und einer Steuerleitung (16) bestehenden Versorgungsanschluß (17) für das Anbaugetät verbunden ist, die alle miteinander parallel verschaltet sind,
◆ der Versorgungsanschluß (17) mit den am Anbaugerät angeordneten Steuer- und Regelventilen zum hydraulischen Antrieb seiner Funkfionsorgane hydraulisch verbindbar ist,
**dadurch gekennzeichnet, daß**
a) in der den Restvolumenstrom führenden untergeordneten Ausgangsleitung (9) des Vorzugsventils- Lenkung (6) von den Verbrauchern als erstes der Versorgungsanschluß (17) für das Anbaugerät angeordnet ist und erst danach der Ventilblock (18) für die Arbeitshydraulik,
b) dem Versorgungsanschluß (17) ein zusätzliches Vorzugsventil (14) vorgeordnet ist, dessen vorrangige Druckanschlußleitung (15) und Steuerleitung (16) zum Versorgungsanschluß (17) und die denRestvolumenstrom führende untergeordnete Ausgangsleitung (19) zum Ventilblock (18) der Arbeitshydraulik führt.

2. Hydrauliksystem nach Anspruch 1, **dadurch gekennzeichnet, daß** die Hydraulikpumpe mit dem Vorzugsventil- Lenkung (6) verbunden ist, das mit seiner vorrangigen Ausgangsleitung (7) mit dem Lenkventil (8) zur Betätigung der Lenkung und mit seiner den Restvolumenstrom führenden untergeordneten Ausgangsleitung (9) mit einem Vorzugsventil- Bremse (10) in Verbindung steht, dessen vorrangige Ausgangsleitung (11) wiederum mit einem Anhängerbremsventil (12) zur Betätigung der Anhängerbremse und dessen untergeordnete Ausgangsleitung (13) mit dem zusätzlichen Vorzugsventil (14) für den Versorgungsanschluß (17) für das Arbeitsgerät verbunden ist und daß die vorrangige Druckanschlußleitung (15) des zusätzlichen Vorzugsventils (14) zum Versorgungsanschluß (17) für das Arbeitsgerät und dessen untergeordnete Ausgangsleitung (19) schließlich zum Ventilblock (18) der Arbeitshydraulik führt.

3. Hydrauliksystem nach den Ansprüchen 1 und 2, **dadurch gekennzeichnet, daß** das zusätzliche Vorzugsventil (14) für den Versorgungsanschluß (17) als separates Teil vor dem Ventiblock (18) der Arbeitshydraulik angeordnet ist.

4. Hydrauliksystem nach den Ansprüchen 1 und 2, **dadurch gekennzeichnet, daß** das zusätzliche Vorzugsventil (14) für den Versorgungsanschluß (17) integrierter Bestandteil des Ventilblocks (18) der Arbeitshydraulik ist.

5. Hydrauliksystem nach den Ansprüchen 1 und 2, **dadurch gekennzeichnet, daß** die Hydraulikpumpe als Konstantpumpe (1) ausgebildet ist, die mit einem lastkompensierten oder nicht lastkompensierten Ventilblock (18) der Arbeitshydraulik verbunden ist.

6. Hydrauliksystem nach den Ansprüchen 1 und 2, **dadurch gekennzeichnet, daß** die Hydraulikpumpe als Verstellpumpe (22) ausgebildet ist, die mit einem lastkompensierten Ventilblock (18) der Arbeitshydraulik verbunden ist.

## Claims

1. Hydraulic system of a tractor with an attachment without its own pressure supply, in which:
◆ A hydraulic pump with a steering priority valve (6) connected to it, which with its priority outlet pipe (7) is connected to a steering valve (8) for actuating the steering,
◆ the steering priority valve (6) with its subordinate outlet pipe (9) conveying the residual volume flow with a valve block (18) of the power hydraulics, which includes at least one lift control valve (20) and one or more distributing valves (21), and a supply connection (17) consisting of a pressure connecting pipe (15) and a control line (16) for the attachment, which are all connected in parallel with each other,
◆ the supply connection (17) which is hydraulically connectable with control and regulating valves arranged on the attachment for the hydraulic drive of its functional elements,
**characterised in that**
a) in the subordinate outlet pipe (9) the steering priority valve (6) conveying the residual volume flow is arranged as the first of the consumers for the supply connection (17) for the attachment and only after that the valve block (18) for the power hydraulics,
b) in front of the supply connection (17) an additional priority valve (14) is arranged, whose priority pressure connecting pipe (15) and control pipe (16) to the supply connection (17) and subordinate outlet pipe (19) conveying the residual volume flow leads to the valve block (18) of the power hydraulics. priority

2. Hydraulic system in accordance with claim 1, **characterised in that**, the hydraulic pump is connected to the steering priority valve (6), which with its priority outlet pipe (7) with the steering valve (8) for actuating the steering and with its subordinate outlet pipe (9) conveying the residual volume flow is connected with a brake priority valve (10), whose priority outlet pipe (11) is in turn connected with a trailer brake valve (12) for actuating the trailer brake and whose subordinate outlet pipe (13) is connected with the additional priority valve (14) for the supply connection (17) for the implement and that the priority pressure connecting pipe (15) of the additional priority valve (14) leads to the supply connection (17) for the implement and its subordinate outlet pipe (19) leads finally to the valve block (18) of the power hydraulics.

3. Hydraulic system in accordance with claims 1 and 2, **characterised in that**, the additional priority valve (14) for the supply connection (17) is arranged as a separate part in front of the valve block (18) of the power hydraulics.

4. Hydraulic system in accordance with claims 1 and 2, **characterised in that** the additional priority valve (14) for the supply connection (17) is an integral component of the valve block (18) of the power hydraulics.

5. Hydraulic system in accordance with claims 1 and 2, **characterised in that** the hydraulic pump is designed as a fixed displacement pump (1), which is connected with a load-compensated or a non load-compensated valve block (18) of the power hydraulics.

6. Hydraulic system in accordance with claims 1 and 2, **characterised in that** the hydraulic pump is designed as a variable displacement pump (22), which is connected with a load-compensated valve block (18) of the power hydraulics.

## Revendications

1. Système hydraulique d'un tracteur avec outil porté sans alimentation en pression propre dans lequel :
◆ Une pompe hydraulique est reliée avec un clapet préférentiel-direction (6), qui est en relation, par sa conduite de sortie prioritaire (7), avec un clapet de direction (8) pour l'actionnement de la direction,
◆ le clapet préférentiel-direction (6) avec sa conduite de sortie subordonnée conduisant le flux volumique résiduel (9) est relié à des appareils de distribution et de régulation groupés (18) de l'hydraulique de travail, dont font au moins partie un clapet de régulation du dispositif de levage (20) et un ou plusieurs distributeurs (21) à plusieurs orifices, de même qu'un raccord d'alimentation (17) constitué d'une conduite de raccordement forcée (15) et d'une conduite de commande (16) pour l'outil porté, qui sont tous montés parallèlement les uns aux autres,
◆ le raccord d'alimentation (17) peut être relié hydrauliquement à des clapets de commande et de distribution disposés sur l'outil porté pour l'entraînement hydraulique de ses organes fonctionnels,
**caractérisé en ce que**,
a) dans la conduite de sortie (9) subordonnée conduisant le flux volumique résiduel du clapet préférentiel-direction (6) depuis les consommateurs c'est d'abord le premier raccord d'alimentation (17) pour l'outil porté qui est disposé, seulement ensuite les appareils de distribution et de régulation groupés( 18) pour l'hydraulique de travail,
b) le raccord d'alimentation (17) est précédé d'un clapet préférentiel supplémentaire (14) dont la conduite de raccordement forcée prioritaire (15) et la conduite de distribution (16) conduisent au raccord d'alimentation (17) et la conduite de sortie subordonnée (19) conduisant le flux volumique résiduel aux appareils de distribution et de régulation groupées (18) de l'hydraulique de travail.

2. Système hydraulique selon la revendication 1, **caractérisé en ce que** la pompe hydraulique est reliée au clapet préférentiel-direction (6) qui est en relation avec sa conduite de sortie prioritaire (7) avec le clapet de direction (8) pour l'actionnement de la direction et avec sa conduite de sortie (9) subordonnée conduisant le flux volumique résiduel avec un clapet préférentiel-frein (10), dont la conduite de sortie prioritaire (11) est à son tour reliée à un clapet de frein à air comprimé de remorque (12) pour l'actionnement du frein de remorque et sa conduite de sortie subordonnée (13) avec le clapet préférentiel supplémentaire (14) pour le raccord d'alimentation (17) pour l'outil de travail et **en ce que** la conduite de raccordement forcée prioritaire (15) du clapet préférentiel supplémentaire (14) conduit au raccord d'alimentation (17) pour l'outil de travail et sa conduite de sortie subordonnée (19), enfin, aux appareils de distribution et de régulation groupés (18) de l'hydraulique de travail.

3. Système hydraulique selon les revendications 1 et 2, **caractérisé en ce que** le clapet préférentiel supplémentaire (14) pour le raccord d'alimentation (17) est disposé en tant qu'élément séparé devant les appareils de distribution et de régulation groupés (18) de l'hydraulique de travail.

4. Système hydraulique selon les revendications 1 et 2, **caractérisé en ce que** le clapet préférentiel supplémentaire (14) pour le raccord d'alimentation (17) fait partie intégrante des appareils de distribution et de régulation groupés (18) de l'hydraulique de travail.

5. Système hydraulique selon les revendications 1 et 2, **caractérisé en ce que** la pompe hydraulique a la forme d'une pompe à cylindrée constante (1) qui est reliée avec des appareils de distribution et de régulation groupés (18) de l'hydraulique du travail, avec compensation de charge ou sans compensation de charge.

6. Système hydraulique selon les revendications 1 et 2, **caractérisé en ce que** la pompe hydraulique a la forme d'une pompe à cylindrée variable (22) qui est reliée avec des appareils de distribution et de régulation groupés (18) de l'hydraulique du travail, avec compensation de charge.
